# FASCICULE DE BREVET EUROPEEN

(11) **EP 1 566 935 B1**
(45) Date de publication et mention de la délivrance du brevet: **25.07.2012**
(21) Numéro de dépôt: 05101201.1
(22) Date de dépôt: 17.02.2005
(51) Int. Cl.: H04L 27/26

(54) **Dispositif et procédé de suppression d'interférences impulsionnelles dans un signal**
Vorrichtung und Verfahren zur Unterdrückung von Impulsinterferenzen in einem Signal
Device and method for suppression of impulsive interferences in a signal

(30) Priorité: 19.02.2004 FR 0450312
(43) Date de publication de la demande: 24.08.2005
(73) Titulaire: STMICROELECTRONICS S.A., 92120 Montrouge (FR)
(72) Inventeur: Alcouffe, Nicole, 38000 Grenoble (FR)
(74) Mandataire: de Beaumont, Michel

(56) Documents cités:
- EP-A- 0 792 017
- US-A- 4 736 163

## Description

La présente invention concerne un dispositif et un procédé de suppression d'interférences impulsionnelles contenues dans un signal. A titre d'exemple, la présente invention concerne un dispositif et un procédé de suppression d'interférences impulsionnelles pour un démodulateur de type COFDM ("Coded Orthogonal Frequency Division Multiplex" ou multiplexage par division de fréquence orthogonale codée).

Lors d'une modulation COFDM, des paquets de données à émettre sont mis sous la forme de N coefficients complexes associés à N fréquences (ou porteuses) respectives. Le nombre N des fréquences est égal par exemple à 1705 pour le mode dit "2K" et à 6817 pour le mode dit "8K", en transmission hertzienne de télévision numérique. L'ensemble de ces N coefficients est traité par transformée de Fourier rapide inverse (IFFT), ce qui produit un "symbole" constitué d'une somme de porteuses modulées, chaque porteuse ayant une amplitude et une phase déterminées par le coefficient complexe associé. Le symbole ainsi généré est émis.

De manière classique, en transmission hertzienne, la largeur du canal d'émission est de 6, 7 ou 8 MHz et chaque porteuse est séparée de la suivante par un écart de fréquence Δf = 1/Tu. Tu est la durée d'émission d'un symbole et est appelée durée utile. La durée utile est de l'ordre de 224 µs en mode 2K et 896 µs en mode 8K, pour une bande passante de 8 MHz.

A la réception, un récepteur fait subir au symbole le traitement inverse, c'est-à-dire principalement une transformée de Fourier rapide (FFT) pour reconstituer les coefficients complexes de départ. Certaines porteuses du signal modulé, appelées pilotes, sont utilisées lors de la démodulation pour déterminer une estimation de la réponse fréquentielle du canal de transmission utilisé et pour réaliser la transformée de Fourier rapide du signal modulé.

Le signal reçu par le démodulateur COFDM correspond au signal modulé transmis modifié par des perturbations d'origines diverses. Il est donc nécessaire de corriger le signal reçu pour retrouver les symboles transmis. Parmi les perturbations affectant le signal reçu, on distingue le bruit de transmission et les interférences impulsionnelles. Le bruit de transmission correspond généralement à une perturbation à faible énergie qui est présente en permanence et qui est caractéristique du canal de transmission emprunté par le signal entre le récepteur et l'émetteur. Au contraire, les interférences impulsionnelles correspondent à des perturbations très courtes en durée mais qui ont une énergie élevée. Il s'agit de perturbations qui ne sont ni reproductibles ni prévisibles, qui ne sont pas présentes tout le temps, et qui peuvent se produire de façon isolée ou groupée à n'importe quel instant avec une amplitude, une durée, et un instant de départ non prévisibles. Les interférences impulsionnelles sont, par exemple, dues à des équipements électriques situés à proximité des composants du démodulateur.

Le bruit de transmission et les interférences impulsionnelles ne peuvent donc pas être corrigés par des procédés de correction identiques. La correction du bruit de transmission utilise généralement les propriétés de stabilité temporelle d'une telle perturbation. La correction des interférences impulsionnelles met généralement en oeuvre un procédé consistant à détecter individuellement chaque interférence impulsionnelle et à corriger le signal modulé reçu lorsqu'une interférence impulsionnelle est détectée. Un exemple de procédé de détection et de correction des interférences impulsionnelles classique est le procédé de détection par seuil avec substitution par zéro. Un tel procédé est, par exemple, mis en oeuvre sur le démodulateur de référence STV0360, commercialisé par la Demanderesse. Il s'agit de détecter la présence des interférences impulsionnelles en comparant, à un seuil de comparaison déterminé, l'amplitude d'un signal modulé numérique obtenu par conversion analogique-numérique du signal modulé analogique reçu par le démodulateur, généralement après un changement de fréquence vers une plage de fréquences intermédiaires. Toutes les valeurs numériques du signal modulé numérique supérieures au seuil déterminé sont remplacées par une valeur prédéterminée, par exemple la valeur moyenne du signal.

La difficulté principale de la détection par seuil est le choix du seuil de comparaison. En effet, si le seuil est trop élevé, seules des interférences impulsionnelles à très haute énergie sont détectées et des interférences impulsionnelles d'un niveau énergétique moins élevé peuvent ne pas être détectées. Inversement, si le seuil de détection est trop faible, une partie du signal modulé numérique non perturbée par des interférences impulsionnelles peut être supprimée.

Le document US 4 736 163 décrit un circuit de détection d'interférences dans un signal.

La présente invention prévoit un dispositif et un procédé de suppression des interférences impulsionnelles perturbant un signal, notamment un signal reçu par un démodulateur COFDM, permettant la suppression des interférences impulsionnelles à haute énergie, mais aussi des interférences impulsionnelles à énergie modérée, tout en limitant le risqué de détection inexacte d'interférences impulsionnelles.

Pour atteindre cet objet, la présente invention prévoit un dispositif de suppression d'interférences impulsionnelles contenues dans un signal selon la revendication 1.

La présente invention prévoit également un procédé de suppression d'interférences impulsionnelles contenues dans un signal selon la revendication 7.

Cet objet, ces caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1 représente schématiquement un exemple de réalisation d'un démodulateur COFDM selon l'invention ;
la figure 2 représente schématiquement un exemple de réalisation selon l'invention du module de suppression d'interférences impulsionnelles du démodulateur de la figure 1 ;
la figure 3 représente un schéma plus détaillé du module de suppression d'interférences impulsionnelles de la figure 2 ;
la figure 4 représente un schéma plus détaillé d'un composant de la figure 3 ; et
les figures 5 et 6 représentent, chacune pour un type de démodulateur COFDM, des courbes indiquant les interférences impulsionnelles qui sont détectées par le démodulateur lorsque aucun procédé de suppression des interférences impulsionnelles n'est mis en oeuvre, lorsqu'un procédé de correction des interférences impulsionnelles du type à détection de seuil est mis en oeuvre et lorsqu'un procédé de correction des interférences impulsionnelles selon l'invention est mis en oeuvre.

La présente invention va maintenant être décrite pour un démodulateur COFDM. Il est clair que la présente invention trouve application pour tout type de système de traitement d'un signal perturbé par des interférences impulsionnelles que l'on souhaite corriger.

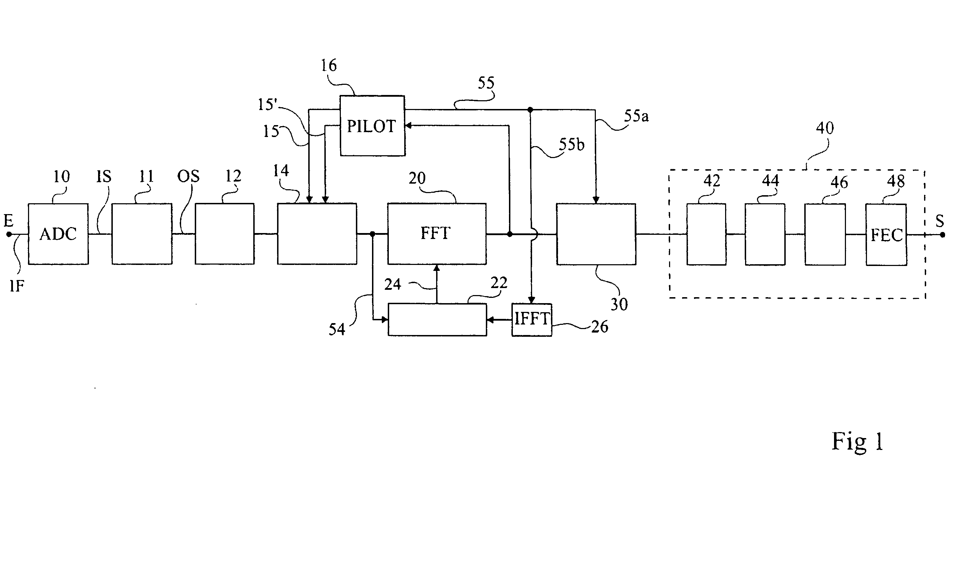

La figure 1 représente, plus en détail, un exemple de démodulateur COFDM selon l'invention. Une entrée E du démodulateur reçoit un signal IF de fréquence intermédiaire permettant un échantillonnage, par exemple 36 MHz. Le signal IF correspond au signal reçu après divers changements ou transpositions de fréquence.

L'entrée E est couplée à un convertisseur analogique-numérique 10 (ADC) qui numérise le signal d'entrée IF. Le convertisseur analogique/numérique 10 fournit un signal IS à un module 11 de suppression des interférences impulsionnelles. Le module 11 fournit un signal OS correspondant au signal signé IS dans lequel les interférences impulsionnelles sont supprimées. Le module 11 attaque un module 12 de changement de fréquence. Le module 12 fournit un signal sensiblement en bande de base, le spectre du signal en sortie du module 12 étant centré sur une fréquence sensiblement égale à zéro. Le module 12 est couplé à un module 14 permettant d'une part un réglage fin de la fréquence centrale du spectre du signal et, d'autre part, de fournir des échantillons temporels à des instants appropriés au traitement ultérieur. En sortie du module 14, le spectre du signal est centré sur une fréquence égale à 0 et le nombre et la position temporelle des échantillons sont adaptés à la transformation par transformée de Fourier qui a lieu dans le module suivant. Le module 14 est commandé par des liaisons 15 et 15' reliant le module 14 à un module 16 de traitement des pilotes.

La sortie du module 14 attaque un module 20 de transformée de Fourier rapide (FFT) qui fournit les fréquences correspondant à un symbole. Le module 20 est piloté par un module 22 qui fournit, par l'intermédiaire d'une liaison 24, un signal de réglage de la fenêtre d'analyse de la transformée de Fourier.

La sortie du module 20 est couplée au module 16 qui réalise l'extraction et le traitement des pilotes. Le module 16 fournit sur les liaisons 15 et 15' les signaux destinés à corriger la fréquence centrale du spectre et la fréquence d'échantillonnage du signal.

La sortie du module 20 attaque un module 30 dans lequel le signal est corrigé à l'aide d'une estimation de la réponse fréquentielle du canal. L'estimation de la réponse fréquentielle du canal est réalisée dans le module 16 à l'aide des pilotes. Cette estimation est fournie par le module 16 sur une liaison 55, dont une branche 55a est couplée au module 30. En sortie du module 30, le signal comprend notamment les porteuses véhiculant les données.

L'estimation de la réponse fréquentielle du canal, fournie par le module 16, alimente, par l'intermédiaire de la liaison 55 et d'une branche 55b de la liaison 55, un module 26 de transformée de Fourier inverse (IFFT), pour déterminer la réponse impulsionnelle du canal. Le module 26 fournit la réponse impulsionnelle du canal au module 22, pour ajuster dynamiquement le positionnement de la fenêtre d'analyse FFT.

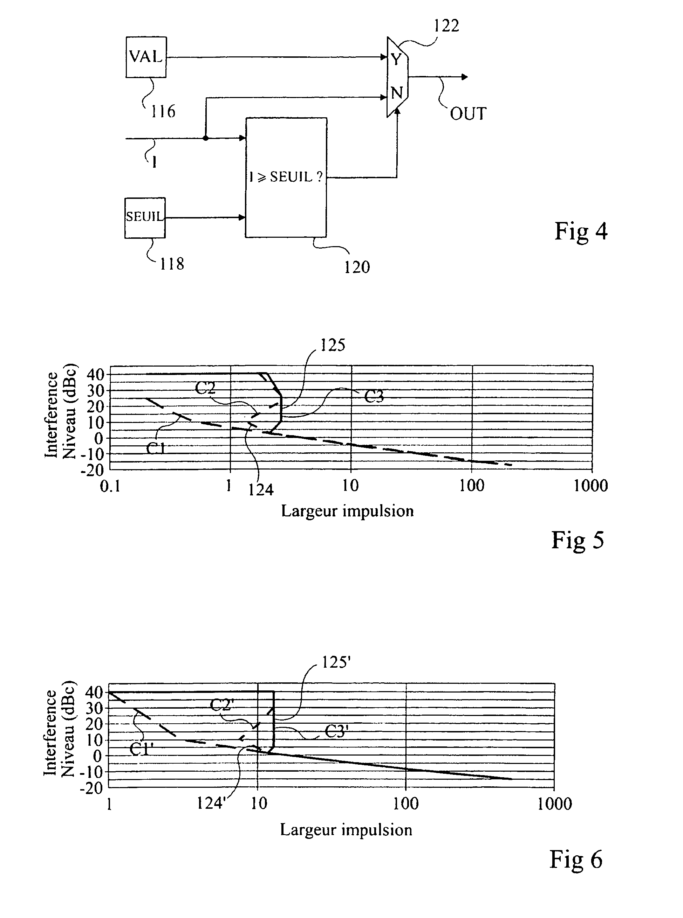

Le traitement des porteuses véhiculant les données est assuré dans un circuit 40 de traitement et fourniture de données. Le circuit 40 a une structure classique et peut comporter, comme cela est représenté en figure 4, un module 42 de désentrelacement de symboles, un module 44 dit de "démappage", un module 46 de désentrelacement de bits, et un module 48 (FEC) de correction d'erreur. La sortie du module 48 constitue la sortie S du circuit 40 et du démodulateur et fournit des données correspondant aux données émises. Le module 22 reçoit le signal de sortie du module 14 par une liaison 54, pour régler grossièrement la fenêtre d'analyse.

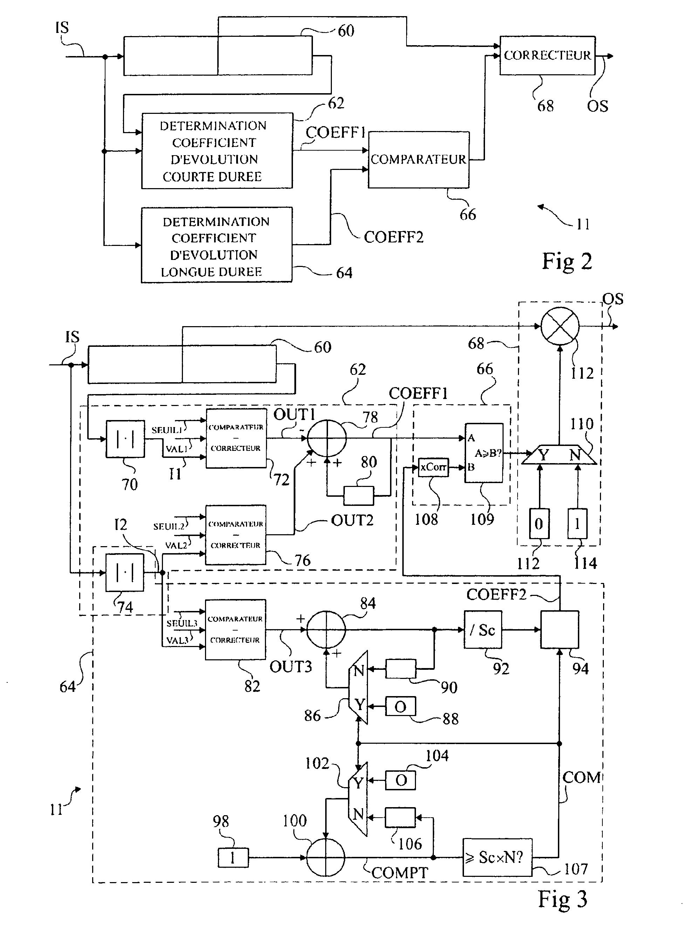

La figure 2 représente schématiquement un exemple de réalisation du module de suppression d'interférences impulsionnelles 11 selon l'invention. Le module 11 reçoit le signal IS en sortie du convertisseur analogique/numérique 10, et fournit le signal de sortie OS qui attaque le module de transfert du signal en bande de base 12.

Le module 11 comprend une mémoire 60 adaptée à stocker simultanément les N dernières valeurs numériques successives du signal d'entrée IS reçues par le module 11, N étant à titre d'exemple un entier naturel pair de l'ordre de 32 à 64. Par la suite, on appellera valeur du signal IS d'instant t0, la valeur numérique la plus récente du signal IS reçue par le module 11 et respectivement valeurs du signal IS d'instants t1 à tN, les N valeurs numériques successives du signal IS stockées dans la mémoire 60, la valeur numérique du signal IS d'instant tN étant la plus ancienne.

Le module 11 comprend un module 62 de détermination d'un coefficient COEFF1 représentatif de l'évolution du signal d'entrée IS pour les N dernières valeurs numériques du signal IS reçues, appelé par la suite coefficient d'évolution courte durée, qui, par exemple, reçoit simultanément la valeur numérique du signal IS d'instant t0 et la valeur numérique du signal IS d'instant tN stockée dans la mémoire 60 ou qui reçoit toutes les valeurs stockées dans la mémoire 60. Le module 11 comprend un module 64 de détermination d'un coefficient COEFF2 représentatif de l'évolution du signal reçu par le démodulateur pour un nombre de valeurs numériques récemment reçues nettement supérieur à N, appelé par la suite coefficient d'évolution longue durée, qui reçoit la valeur numérique du signal IS d'instant t0.

Un module comparateur 66 détermine la présence ou l'absence d'une interférence impulsionnelle sur les N dernières valeurs numériques du signal IS reçues en comparant les coefficients d'évolution courte durée COEFF1 et longue durée COEFF2 avec un critère de comparaison déterminé. Un module correcteur 68 reçoit la valeur numérique du signal IS d'instant N/2 stockée dans la mémoire 60 et la sortie du module comparateur 66 et corrige la valeur numérique du signal IS d'instant tN/2 pour fournir le signal numérique de sortie OS si le module comparateur 66 a détecté la présence d'une interférence impulsionnelle.

Selon le présent exemple de réalisation, la correction réalisée par le module correcteur 68 consiste à remplacer la valeur numérique du signal d'entrée IS d'instant tN/2, fournie par la mémoire 60, par une valeur moyenne, ou par une valeur constante quelconque, à la détection d'une interférence impulsionnelle.

Un exemple de coefficient d'évolution adapté à la détection des interférences impulsionnelles est l'écart-type. Toutefois, le calcul de l'écart-type requiert la réalisation d'opérations de multiplication qui, lorsqu'elles sont réalisées par un circuit intégré, nécessitent un circuit occupant une surface de silicium importante. Il peut donc être avantageux d'utiliser un coefficient correspondant à une approximation de l'écart-type et dont le calcul met en oeuvre essentiellement des additions pouvant être réalisées par un circuit occupant une surface de silicium réduite. Dans l'exemple de réalisation décrit par la suite, le coefficient d'évolution utilisé correspond à la somme des valeurs absolues de valeurs numériques, éventuellement corrigées, du signal numérique IS. Un tel coefficient fournit une information similaire à celle de l'écart-type, et sera donc appelé coefficient pseudo écart-type. Le coefficient pseudo écart-type longue durée COEFF2, déterminé à partir d'un nombre relativement important de valeurs numériques successives du signal d'entrée IS, tend vers le coefficient pseudo écart-type qui serait obtenu avec un signal d'entrée IS non perturbé par des interférences impulsionnelles. Le coefficient pseudo écart-type courte durée COEFF1, déterminé pour un nombre N moins important de valeurs numériques successives du signal numérique d'entrée IS, varie de façon significative lorsqu'une interférence impulsionnelle est présente sur les N valeurs numériques successives utilisées pour le calcul du coefficient pseudo écart-type courte durée. En comparant le coefficient pseudo écart-type courte durée COEFF1 et le coefficient pseudo écart-type longue durée COEFF2, on peut conclure à l'absence ou à la présence d'interférences impulsionnelles sur les N valeurs numériques utilisées pour déterminer le coefficient pseudo écart-type courte durée, et donc modifier ou non la valeur numérique située au milieu des N valeurs numériques successives utilisées pour déterminer le coefficient pseudo écart-type courte durée.

La figure 3 représente un exemple de réalisation plus détaillé du module 11 de la figure 2. Le module 62 de détermination du coefficient pseudo écart-type courte durée comprend un module valeur absolue 70 qui reçoit les valeurs numériques successives du signal IS d'instant tN stockées dans la mémoire 60 et qui fournit un signal I1 correspondant aux valeurs absolue des valeurs numériques successives du signal IS d'instant tN. Le module valeur absolue 70 attaque un module comparateur-correcteur 72. Le module comparateur-correcteur 72 compare le signal I1 à un seuil SEUIL1. Si le signal I1 est inférieur au seuil SEUIL1, le comparateur-correcteur 72 fournit un signal OUT1 égal au signal I1, non modifié. Si le signal I1 est supérieur au seuil SEUIL1, le comparateur-correcteur 72 fournit un signal OUT1 égal à une constante de pondération VAL1. En outre, le module 62 comprend un module valeur absolue 74 qui fournit un signal 12 correspondant aux valeurs absolues des valeurs numériques successives du signal IS d'instant t0 et qui attaque un module comparateur-correcteur 76, analogue au module 72. Le module comparateur-correcteur 74 compare le signal 12 à un seuil SEUIL2. Si le signal 12 est inférieur au seuil SEUIL2, le comparateur-correcteur 74 fournit un signal OUT2 égal au signal 12, non modifié. Si le signal 12 est supérieur au seuil SEUIL2, le comparateur-correcteur 74 fournit un signal OUT2 égal à une constante de pondération VAL2. Les seuils SEUIL1 et SEUIL2 sont identiques et les constantes de pondération VAL1 et VAL2 sont identiques et égales à un multiple du seuil SEUIL1, par exemple, quatre fois le seuil SEUIL1. Le module 62 comprend un additionneur-soustracteur 78 recevant les signaux OUT1 et OUT2 et la sortie d'une mémoire 80 dans laquelle est stockée la dernière valeur fournie par l'additionneur-soustracteur 78. L'additionneur-soustracteur 78 effectue la somme du contenu de la mémoire 80 et du signal OUT2 à laquelle il soustrait le signal OUT2. L'additionneur-soustracteur 78 fournit, à une entrée A du module comparateur 66, un signal COEFF1, correspondant au coefficient pseudo écart-type courte durée, qui est égal à la somme de N valeurs successives du signal OUT3. L'utilisation des constantes de pondération VAL1, VAL2 permet d'accentuer le poids des valeurs du signal 12 de forte amplitude dans la détermination du coefficient COEFF1.

Le module 64 de détermination du coefficient pseudo écart-type longue durée comprend le module valeur absolue 74, en commun avec le module 62, qui attaque un module comparateur-correcteur 82 analogue aux modules 72, 76. Le module comparateur-correcteur 82 compare le signal 12 à un seuil SEUIL3. Si le signal 12 est inférieur au seuil SEUIL3, le comparateur-correcteur 82 fournit un signal OUT3 égal au signal 12, non modifié. Si le signal 12 est supérieur au seuil SEUIL3, le comparateur-correcteur 82 fournit un signal OUT3 égal à une constante de pondération VAL3. Dans le présent exemple de réalisation, la constante de pondération VAL3 est nulle, ce qui permet d'écarter d'entrée les valeurs du signal 12 dont l'amplitude est très élevée dans la détermination du coefficient pseudo écart-type longue durée.

Le module 64 comprend un additionneur 84 recevant le signal OUT3 et la sortie d'un multiplexeur 86. Le multiplexeur 86 reçoit à une première entrée le contenu d'une mémoire 88 dans laquelle est stockée la valeur nulle et à une seconde entrée le contenu d'une mémoire 90 dans laquelle est stocké le signal fourni par l'additionneur 84. L'additionneur 84 attaque un module 92 effectuant une division du signal fourni par l'additionneur 84 par un facteur d'échelle Sc. La sortie du module 92 attaque une bascule 94 commandée par un signal de commande COM. La bascule 94 fournit un signal COEFF2, correspondant au coefficient pseudo écart-type longue durée.

Le multiplexeur 86 est commandé par le signal de commande COM. Comme cela sera décrit plus en détail par la suite, le signal de commande COM est pratiquement continuellement égal à zéro. Le multiplexeur 86 fournit alors le contenu de la mémoire 90. L'additionneur 84 ajoute donc au signal OUT3 le contenu de la mémoire 90, la somme étant à nouveau stockée dans la mémoire 90. La somme des valeurs numériques constituant le signal OUT3, divisée par le coefficient d'échelle Sc, est donc fournie en entrée de la bascule 94 qui reste bloquée. Lorsque la somme est effectuée pour N x Sc valeurs successives du signal OUT3, le signal de commande COM passe à 1 pendant un cycle d'horloge de fonctionnement du module 11. La bascule 94 devient alors passante et fournit donc le signal COEFF2 correspondant à la somme, divisée par le facteur d'échelle Sc, des N x Sc dernières valeurs successives du signal OUT3. Le signal de commande COM étant à 1, le multiplexeur 86 fournit la valeur nulle, et l'additionneur 84 reproduit en sortie le signal OUT3. Le signal de commande COM repasse à 0 au cycle d'horloge suivant, entraînant le calcul de la somme des N x Sc valeurs suivantes du signal OUT3. Le signal COEFF2, fourni par le module 64, est donc "rafraîchi" tous les N x Sc cycles d'horloge.

Pour l'obtention du signal de commande COM, le module 64 comprend une mémoire 98 fournissant, à chaque cycle d'horloge, la valeur 1 à un additionneur 100 recevant par ailleurs la sortie d'un multiplexeur 102 et fournissant un signal d'incrémentation COMPT. Le multiplexeur 102 reçoit à une entrée le contenu d'une mémoire 104 dans laquelle est stockée la valeur nulle et à une autre entrée le contenu d'une mémoire 106 dans laquelle est stockée le signal d'incrémentation COMPT. Le multiplexeur 102 est commandé par le signal de commande COM. Tant que le signal de commande COM est égal à 0, le multiplexeur 102 fournit à l'additionneur 100 la sortie de la mémoire 106. Dans ce cas, à chaque cycle d'horloge, le signal d'incrémentation COMPT augmente d'une unité. L'additionneur 100 attaque un comparateur 107 qui compare le signal d'incrémentation COMPT à un seuil égal au produit de l'entier N et du facteur d'échelle Sc. A titre d'exemple, le facteur d'échelle Sc est égal à plusieurs centaines. Le comparateur 107 fournit le signal de commande COM qui est égal à la valeur 1 lorsque le signal d'incrémentation COMPT est supérieur à N x Sc, et égal à 0 lorsque le signal d'incrémentation COMPT est inférieur à N x Sc. Dès que le signal de commande COM passe à 1, le multiplexeur 102 fournit la valeur nulle et le signal d'incrémentation COMPT repasse à 1. Le signal de commande COM repasse alors à zéro. Le signal de commande COM conserve donc la valeur 1 pour un seul cycle d'horloge.

Le signal COEFF2 correspond à la somme, divisée par le facteur d'échelle Sc, de N x Sc valeurs successives du signal OUT3, c'est-à-dire pour un nombre de valeurs plus grand, du facteur Sc, que le nombre de valeurs utilisé pour la fourniture du signal COEFF1.

Le module comparateur 66 comprend un module 108 recevant le signal COEFF2, fourni par la bascule 94, et qui multiplie le signal COEFF2 par un coefficient correctif Corr. A titre d'exemple, le coefficient correctif Corr est égal à 3. Le module comparateur 66 comprend un comparateur 109 recevant à une entrée A le signal COEFF1 et à une entrée B la sortie du module 108. Le comparateur 109 fournit un signal égal à 1 si le signal reçu à l'entrée A est supérieur au signal reçu à l'entrée B et fournit un signal égal à 0 dans le cas contraire.

Le module correcteur 68 comprend un multiplexeur 110 commandé par la sortie du comparateur 109 et recevant à une première entrée le contenu d'une mémoire 112 dans laquelle est stockée une constante de pondération, généralement une valeur inférieure à l'unité, par exemple la valeur nulle, et à une seconde entrée le contenu d'une mémoire 114 dans laquelle est stockée la valeur 1. Le multiplexeur 110 attaque un multiplicateur 112 qui fournit le signal de sortie OS. Lorsque le signal COEFF1 est supérieur au signal COEFF2 multiplié par le facteur correctif Corr, le multiplexeur 110 fournit la constante de pondération stockée dans la mémoire 112, et le signal OS est égal à la valeur du signal d'entrée IS d'instant tN/2 stockée dans la mémoire 60 multipliée par la constante de pondération stockée dans la mémoire 112. Lorsque le signal COEFF1 est inférieur au signal COEFF2 multiplié par le facteur correctif Corr, le multiplexeur 110 fournit la valeur 1 et le signal OS est égal à la valeur du signal d'entrée IS d'instant tN/2 stockée dans la mémoire 60. Le coefficient correctif Corr permet d'ajuster la "sensibilité" du module 11 pour éviter la suppression de parties du signal IS non perturbées.

La figure 4 décrit plus en détail un exemple de réalisation des modules comparateur-correcteur 72, 76 et 82. Chacun de ces modules reçoit un signal numérique I (I1 pour le module 72 et 12 pour les modules 76 et 82). Chaque module comprend une première mémoire 116 dans laquelle est stockée une constante de pondération VAL (respectivement VAL1, VAL2, VAL3 pour les modules 72, 76 et 82) et une seconde mémoire 118 dans laquelle est stockée une valeur de seuil de comparaison SEUIL (respectivement SEUIL1, SEUIL2 et SEUIL3 pour les modules 72, 76 et 82). Le module comprend un comparateur 120 adapté à comparer le signal I à la valeur de seuil de comparaison SEUIL. Le comparateur 120 commande un multiplexeur 122 recevant à une première entrée la constante de pondération VAL et à une seconde entrée le signal I. Le multiplexeur 122 fournit un signal de sortie OUT égal à la constante en pondération VAL lorsque le signal I est supérieur au seuil SEUIL, et fournit le signal I non modifié dans le cas contraire.

Les figures 5 et 6 représentent, pour un démodulateur COFDM du type 2K, à modulation 64 QAM, à rapport de poinçonnage de 2/3 (PR=2/3) et un démodulateur COFDM du type 8K, à modulation 64 QAM, et PR=2/3, la capacité de correction du démodulateur lorsqu'un symbole reçu est perturbé par une interférence impulsionnelle. En figure 5 (respectivement en figure 6), l'axe des abscisses correspond à la durée des interférences impulsionnelles, exprimée en µs, et l'axe des ordonnées correspond au rapport, exprimé en décibel, entre le niveau d'énergie des interférences impulsionnelles et l'énergie du signal COFDM.

Trois courbes C1, C2, C3 (respectivement C1', C2', C3') sont représentées et délimitent chacune une région sous la courbe correspondant aux interférences impulsionnelles pouvant être corrigées par le démodulateur, et une région au-dessus de la courbe correspondant aux interférences impulsionnelles ne pouvant pas être corrigées par le démodulateur et entraînant donc dans une dégradation du signal finalement démodulé. La courbe C1 (respectivement C1') représente la limite de tolérance aux interférences impulsionnelles pour un démodulateur ne comprenant pas de module de suppression d'interférences impulsionnelles. La courbe C2 (respectivement C2') représente la limite de tolérance aux interférences impulsionnelles pour un démodulateur équipé d'un module de suppression d'interférences impulsionnelles à détection par seuil classique comme cela été précédemment décrit. La courbe C3 (respectivement C3') représente la limite de tolérance aux inférences impulsionnelles pour un démodulateur équipé du module de suppression d'interférences impulsionnelles 11 selon l'invention. Des courbes d'allure analogue sont obtenues pour tout type de démodulateur COFDM comportant un module de suppression d'interférences impulsionnelles selon l'invention.

La courbe C2 (respectivement C2') comporte un renflement 124 (respectivement 124') pour des interférences impulsionnelles de l'ordre de 2 µs (respectivement 10 µs). Ceci traduit le fait, comme cela été précédemment décrit, que le module de suppression d'interférences impulsionnelles à détection par seuil est efficace pour supprimer des interférences impulsionnelles hautement énergétiques, mais ne permet pas de supprimer des interférences impulsionnelles faiblement énergétiques.

La courbe C3 (respectivement C3') comprend une portion droite verticale 125 (respectivement 125') qui correspond à la limite théorique de tolérance aux perturbations qu'un démodulateur peut accepter. En effet, il est connu qu'un symbole perturbé par une perturbation dont l'énergie est supérieure à environ 1 % de l'énergie d'un symbole ne peut plus être retrouvé correctement. Pour une modulation 2K, la durée d'un symbole utile étant de 224 µs, on considère donc seulement une interférence impulsionnelle de durée inférieure à environ 2.3 µs. Pour une modulation 8K, la durée d'un symbole utile étant de 896 µs, on considère donc seulement une interférence impulsionnelle de durée inférieure à environ 10 µs. La courbe C3 (respectivement C3') suit davantage la limite théorique que la courbe C2 (respectivement C2'). Le démodulateur comprenant le module de suppression d'interférences impulsionnelles selon l'invention permet donc de corriger un signal modulé émis perturbé par des interférences impulsionnelles sur une plus grande plage de durées d'interférences ou de niveaux énergétiques d'interférences qu'un démodulateur comprenant un module de suppression d'interférences impulsionnelles à détection par seuil.

## Revendications

1. Dispositif (11) de suppression d'interférences impulsionnelles contenues dans un signal (IF), comprenant un circuit (62, 64, 66) de détection des interférences impulsionnelles contenues dans le signal, et un circuit de correction (68) du signal perturbé par les interférences impulsionnelles détectées, dans lequel le circuit de détection comprend :
- un circuit de détermination (62) d'un premier coefficient (COEFF1) représentatif d'une caractéristique statistique de l'évolution du signal sur une première durée ;
- un circuit de détermination (64) d'un second coefficient (COEFF2) représentatif d'une caractéristique statistique de l'évolution du signal sur une seconde durée supérieure à la première durée ; et
- un circuit de comparaison (66) comparant les premier et second coefficients et fournissant un signal indicatif de la présence d'une interférence impulsionnelle sur la première durée lorsque le premier coefficient diffère nettement du second coefficient,
**caractérisé en ce que** le circuit de détermination (62) du premier coefficient (COEFF1) fournit la somme des valeurs absolues des valeurs numériques successives obtenues par échantillonnage du signal (IF) pendant la première durée, chaque valeur absolue de valeur numérique supérieure à un seuil déterminé (SEUIL1) étant remplacée par une constante de pondération (VAL1) supérieure ou égale au seuil et **en ce que** le circuit de détermination (64) du second coefficient détermine le second coefficient (COEFF2) à partir des valeurs absolues des valeurs numériques successives obtenues par échantillonnage du signal pendant la seconde durée.

2. Dispositif selon la revendication 1, dans lequel le circuit de détermination (62) du premier coefficient (COEFF1) comprend :
- une première entrée recevant des premières valeurs numériques successives issues de l'échantillonnage du signal (IF) ;
- une seconde entrée recevant des secondes valeurs numériques successives issues de l'échantillonnage du signal décalées temporellement par rapport aux premières valeurs numériques successives de la première durée ;
- un premier circuit de traitement (70, 72) relié à la première entrée et adapté à fournir des troisièmes valeurs numériques successives (OUT1) correspondant aux valeurs absolues des premières valeurs numériques successives, chaque valeur absolue d'une première valeur numérique supérieure au seuil (SEUIL1) étant remplacée par la constante de pondération (VAL1) ;
- un second circuit de traitement (74, 76) relié à la seconde entrée et adapté à fournir des quatrièmes valeurs numériques successives (OUT2) correspondant aux valeurs absolues des secondes valeurs numériques successives, chaque valeur absolue d'une seconde valeur numérique supérieure au seuil étant remplacée par la constante de pondération ;
- un soustracteur (78) relié aux premier et second circuits de pondération et fournissant successivement des cinquièmes valeurs numériques successives correspondant à la soustraction entre les quatrièmes valeurs numériques successives et les troisièmes valeurs numériques successives ; et
- un additionneur (78) dont une première entrée reçoit les cinquièmes valeurs numériques et dont une seconde entrée est reliée à la sortie de l'additionneur et fournissant des sixièmes valeurs numériques successives correspondant au premier coefficient.

3. Dispositif selon la revendication 2, dans lequel la constante de pondération (VAL1) est supérieure ou égale à trois fois le seuil (SEUIL1).

4. Dispositif selon la revendication 1, dans lequel le circuit de détermination (64) du second coefficient (COEFF2) comprend :
- une entrée recevant des premières valeurs numériques successives issues de l'échantillonnage du signal (IF) ;
- un circuit de traitement (74, 82) relié à l'entrée et adapté à fournir des deuxièmes valeurs numériques (OUT3) successives correspondant aux valeurs absolues des premières valeurs numériques successives, chaque valeur absolue d'une première valeur numérique supérieure à un seuil (SEUIL3) étant remplacée par une constante de pondération (VAL3) inférieure ou égale au seuil ;
- un additionneur (84) dont une première entrée reçoit les deuxièmes valeurs numériques successives et dont une seconde entrée est reliée à la sortie de l'additionneur et fournissant des troisièmes valeurs numériques successives ; et
- un circuit (92) recevant les troisièmes valeurs numériques successives et fournissant des quatrièmes valeurs numériques successives, correspondant au second coefficient, égales aux troisièmes valeurs numériques successives multipliées par le rapport entre la première durée et la seconde durée.

5. Dispositif selon la revendication 4, dans lequel la seconde entrée de l'additionneur (84) reçoit la valeur nulle pendant un cycle de fonctionnement de l'additionneur après un nombre déterminé de cycles de fonctionnement successifs équivalent à la seconde durée.

6. Dispositif selon la revendication 4, dans lequel les troisièmes valeurs numériques successives sont multipliées par un coefficient correctif (Corr) supérieur ou égal à 2.

7. Procédé de suppression d'interférences impulsionnelles contenues dans un signal (IF), comprenant une étape de détection des interférences impulsionnelles contenues dans le signal, et une étape de correction des interférences impulsionnelles détectées, dans lequel l'étape de détection comprend :
- une étape de détermination d'un premier coefficient (COEFF1) représentatif d'une caractéristique statistique de l'évolution du signal sur une première durée et d'un second coefficient (COEFF2) représentatif d'une caractéristique statistique de l'évolution du signal sur une seconde durée supérieure à la première durée ; et
- une étape de détection de la présence d'une interférence impulsionnelle sur le signal par comparaison des premier et second coefficients,
**caractérisé en ce que** le premier coefficient (COEFF1) correspond à la somme des valeurs absolues des valeurs numériques successives obtenues par échantillonnage du signal (IF) pendant la première durée, chaque valeur absolue de valeur numérique supérieure à un seuil déterminé (SEUIL1) étant remplacée par une constante de pondération (VAL1) supérieure ou égale au seuil et **en ce que** le second coefficient (COEFF2) est déterminé à partir des valeurs absolues des valeurs numériques successives obtenues par échantillonnage du signal pendant la seconde durée.

8. Procédé selon la revendication 7, dans lequel le second coefficient (COEFF2) correspond à la somme des valeurs absolues, éventuellement corrigées, des valeurs numériques successives obtenues par échantillonnage du signal pendant la seconde durée.

## Claims

1. A device (11) for suppressing pulse interferences contained in a signal (IF), comprising a circuit (62, 64, 66) for detecting pulse interferences contained in the signal, and a circuit (68) for correcting the signal disturbed by the detected pulse interferences, wherein the detection circuit comprises:
a circuit (62) for determining a first coefficient (COEFF1) representative of a statistic characteristic of the variation of the signal over a first time period;
a circuit (64) for determining a second coefficient (COEFF2) representative of a statistic characteristic of the variation of the signal over a second time period longer than the first time period; and
a comparison circuit (66) comparing the first and second coefficients and providing a signal indicative of the presence of a pulse interference over the first time period when the first coefficient clearly differs from the second coefficient,
**characterized in that** the circuit (62) for determining the first coefficient (COEFF1) provides the sum of the absolute values of the successive digital values obtained by sampling of the signal (IF) during the first time period, each absolute value having a digital value greater than a determined threshold (SEUIL1) being replaced with a weighting constant (VAL1) greater than or equal to the threshold, and **in that** the circuit (64) for determining the second coefficient determines the second coefficient (COEFF2) based on the absolute values of the successive digital values obtained by sampling of the signal during the second time period.

2. The device of claim 1, wherein the circuit (62) for determining the first coefficient (COEFF1) comprises:
a first input receiving first successive digital values provided by the sampling of the signal (IF);
a second input receiving second successive digital values provided by the signal sampling shifted in time with respect to the first successive digital values of the first time period;
a first processing circuit (70, 72) connected to the first input and capable of providing third successive digital values (OUT1) corresponding to the absolute values of the first successive digital values, each absolute value of a first digital value greater than the threshold (SEUILL) being replaced with the weighting constant (VAL1);
a second processing circuit (74, 76) connected to the second input and capable of providing fourth successive digital values (OUT2) corresponding to the absolute values of the second successive digital values, each absolute value of a second digital value greater than the threshold being replaced with the weighting constant;
a subtractor (78) connected to the first and second weighting circuits and successively providing fifth successive digital values corresponding to the subtraction between the fourth successive digital values and the third successive digital values; and
an adder (78) having a first input receiving the fifth successive digital values and having a second input connected to the output of the adder and providing sixth successive digital values corresponding to the first coefficient.

3. The device of claim 2, wherein the weighting constant (VAL1) is greater than or equal to three times the threshold (SEUIL1) .

4. The device of claim 1, wherein the circuit (64) for determining the second coefficient (COEFF2) comprises:
an input receiving first successive digital values provided by the sampling of the signal (IF);
a processing circuit (74, 82) connected to the input and capable of providing second successive digital values (OUT3) corresponding to the absolute values of the first successive digital values, each absolute value of a first digital value greater than a threshold (SEUIL3) being replaced with a weighting constant (VAL3) smaller than or equal to the threshold;
an adder (84) having a first input receiving the second successive digital values and having a second input connected to the output of the adder and providing third successive digital values; and
a circuit (92) receiving the third successive digital values and providing fourth successive digital values, corresponding to the second coefficient, equal to the third successive digital values multiplied by the ratio between the first time period and the second time period.

5. The device of claim 4, wherein the second input of the adder (84) receives the zero value during an operating cycle of the adder after a determined number of successive operating cycles equivalent to the second time period.

6. The device of claim 4, wherein the third successive digital values are multiplied by a correction coefficient (Corr) greater than or equal to 2.

7. A method for suppressing pulse interferences contained in a signal (IF), comprising a step of detection of the pulse interferences contained in the signal, and a step of correction of the detected pulse interferences, wherein the detection step comprises:
a step of determination of a first coefficient (COEFF1) representative of a statistic characteristic of the variation of the signal over a first time period and of a second coefficient (COEFF2) representative of a statistic characteristic of the signal variation over a second time period greater than the first time period; and
a step of detection of the presence of a pulse interference on the signal by comparison of the first and second coefficients,
**characterized in that** the first coefficient (COEFF1) corresponds to the sum of the absolute values of the successive digital values obtained by sampling of the signal (IF) during the first time period, each absolute value having a digital value greater than a determined threshold (SEUIL1) being replaced with a weighting constant (VAL1) greater than or equal to the threshold, and **in that** the second coefficient (COEFF2) is determined based on the absolute values of the successive digital values obtained by sampling of the signal during the second time period.

8. The method of claim 7, wherein the second coefficient (COEFF2) corresponds to the sum of the absolute values, possibly corrected, of the successive digital values obtained by sampling of the signal during the second time period.

## Patentansprüche

1. Eine Vorrichtung (11) zum Unterdrücken von Pulsinterferenzen, die in einem Signal (IF) enthalten sind, wobei die Vorrichtung einen Schaltkreis (62, 64, 66) zum Detektieren von Pulsinterferenzen, die in einem Signal enthalten sind, aufweist, und einen Schaltkreis (68) zum Korrigieren des Signals, das durch die detektierten Pulsinterferenzen gestört wird, wobei der Detektionsschaltkreis Folgendes aufweist:
einen Schaltkreis (62) zum Detektieren eines ersten Koeffizienten (COEFF1), der repräsentativ ist für eine statistische Charakteristik der Variation des Signals über eine erste Zeitperiode;
einen Schaltkreis (64) zum Detektieren eines zweiten Koeffizienten (COEFF2), der repräsentativ ist für eine statistische Charakteristik der Variation des Signals über eine zweite Zeitperiode, die länger ist als die erste Zeitperiode; und
einen Vergleichsschaltkreis (66), der den ersten und den zweiten Koeffizienten vergleicht und ein Signal bereitstellt, das anzeigend für die Anwesenheit einer Pulsinterferenz über der ersten Zeitperiode ist, wenn der erste Koeffizient sich klar von dem zweiten Koeffizient unterscheidet,
**dadurch gekennzeichnet, dass** der Schaltkreis (62) zum Bestimmen des ersten Koeffizienten (COEFF1) die Summe der absoluten Werte der aufeinanderfolgenden digitalen Werte bereitstellt, die durch Sampling des Signals (IF) während der ersten Zeitperiode erhalten werden, wobei jeder absolute Wert der einen digitalen Wert aufweist, der größer ist als eine bestimmte Schwelle (SEUIL1), durch eine Gewichtungskonstante (VAL1) ersetzt wird, die größer oder gleich ist als die Schwelle, wobei die Vorrichtung ferner **dadurch gekennzeichnet ist, dass** der Schaltkreis (64) zum Bestimmen des zweiten Koeffizienten den zweiten Koeffizienten (COEFF2) bestimmt, basierend auf den absoluten Werten der aufeinanderfolgenden digitalen Werte, die durch das Sampling des Signals während der zweiten Zeitperiode erhalten werden.

2. Die Vorrichtung nach Anspruch 1, wobei der Schaltkreis (62) zum Bestimmen des ersten Koeffizienten (COEFF1) Folgendes aufweist:
einen ersten Eingang, der erste aufeinanderfolgende digitale Werte empfängt, die durch das Sampling des Signals (IF) bereitgestellt werden;
einen zweiten Eingang, der zweite aufeinanderfolgende digitale Werte empfängt, die durch das Signalsampling bereitgestellt werden, das in der Zeit, bezüglich der ersten aufeinanderfolgenden digitalen Werte der ersten Zeitperiode, verschoben ist;
einen ersten Verarbeitungsschaltkreis (70, 72), der mit dem ersten Eingang verbunden ist und geeignet ist dritte aufeinanderfolgende digitale Werte (OUT1) bereitzustellen, die den absoluten Werten der ersten aufeinanderfolgenden digitalen Werte entsprechen, wobei jeder absolute Wert eines ersten digitalen Wertes, der größer ist als eine Schwelle (SEUIL1) durch die Gewichtungskonstante (VAL1) ersetzt wird;
einen zweiten Verarbeitungsschaltkreis (74, 76), der mit dem zweiten Eingang verbunden ist und geeignet ist vierte aufeinanderfolgende digitale Werte (OUT2) bereitzustellen, die den absoluten Werten der zweiten aufeinanderfolgenden digitalen Werte entsprechen, wobei jeder absolute Wert eines zweiten digitalen Wertes, der größer ist als eine Schwelle (SEUIL1) durch die Gewichtungskonstante ersetzt wird;
einen Subtraktor (78), der mit dem ersten und dem zweiten Gewichtungsschaltkreis verbunden ist und aufeinanderfolgend fünfte aufeinanderfolgende digitale Werte bereitstellt, die der Subtraktion zwischen den vierten aufeinanderfolgenden digitalen Werten und den dritten aufeinanderfolgenden digitalen Werten entsprechen; und
einen Addierer (78) mit einem ersten Eingang, der die fünften aufeinanderfolgenden digitalen Werte empfängt und mit einem zweiten Eingang, der mit dem Ausgang des Addierers verbunden ist und wobei der Addierer sechste aufeinanderfolgende digitale Werte bereitstellt, die dem ersten Koeffizienten entsprechen.

3. Die Vorrichtung nach Anspruch 2, wobei die Gewichtungskonstante (VAL1) größer oder gleich drei Mal der Schwelle (SEUIL1) ist.

4. Die Vorrichtung nach Anspruch 1, wobei der Schaltkreis (64) zum Bestimmen des zweiten Koeffizienten (COEFF2) Folgendes aufweist:
einen Eingang, der erste aufeinanderfolgende digitale Werte empfängt, die durch Sampling des Signals (IF) bereitgestellt werden;
einen Verarbeitungsschaltkreis (74, 82), der mit dem Eingang verbunden ist und geeignet ist zweite aufeinanderfolgende digitale Werte (OUT3) bereitzustellen, die den absoluten Werten der ersten aufeinanderfolgenden digitalen Werte entsprechen, wobei jeder absolute Wert eines ersten digitalen Wertes, der größer ist als eine Schwelle (SEUIL3) durch eine Gewichtungskonstante (VAL3) ersetzt wird, die kleiner oder gleich ist wie die Schwelle;
einen Addierer (84) mit einem ersten Eingang, der die zweiten aufeinanderfolgenden digitalen Werte empfängt und mit einem zweiten Eingang, der mit dem Ausgang des Addierers verbunden ist und wobei der Addierer dritte aufeinanderfolgende digitale Werte bereitstellt; und
einen Schaltkreis (92), der die dritten aufeinanderfolgenden digitalen Werte empfängt und vierte aufeinanderfolgende digitale Werte bereitstellt, die dem zweiten Koeffizienten entsprechen, der gleich ist zu den dritten aufeinanderfolgenden digitalen Werten multipliziert mit dem Verhältnis zwischen der ersten Zeitperiode und der zweiten Zeitperiode.

5. Die Vorrichtung nach Anspruch 4, wobei der zweite Eingang des Addierers (84) den Nullwert während eines Operationszyklus des Addierers empfängt, nach einer bestimmten Anzahl von aufeinanderfolgenden Operationszyklen gleich der zweiten Zeitperiode.

6. Die Vorrichtung nach Anspruch 4, wobei die dritten aufeinanderfolgenden digitalen Werte multipliziert werden mit einem Korrekturkoeffizienten (Corr), der größer oder gleich 2 ist.

7. Ein Verfahren zum Unterdrücken von Pulsinterferenzen, die in einem Signal (IF) enthalten sind, wobei das Verfahren einen Schritt des Detektierens von Pulsinterferenzen, die in einem Signal enthalten sind, aufweist, und einen Schritt zum Korrigieren der detektierten Pulsinterferenzen, wobei der Detektionsschritt Folgendes aufweist:
einen Schritt zum Detektieren eines ersten Koeffizienten (COEFF1), der repräsentativ ist für eine statistische Charakteristik der Variation des Signals über eine erste Zeitperiode und eines zweiten Koeffizienten (COEFF2), der repräsentativ ist für eine statistische Charakteristik der Variation des Signals über eine zweite Zeitperiode, die größer ist als die erste Zeitperiode; und
einen Schritt des Detektierens der Anwesenheit einer Pulsinterferenz auf dem Signal durch Vergleichen des ersten und zweiten Koeffizienten,
**dadurch gekennzeichnet, dass** der erste Koeffizient (COEFF1) der Summe der absoluten Werte der aufeinanderfolgenden digitalen Werte entspricht, die durch Sampling des Signals (IF) während der ersten Zeitperiode erhalten werden, wobei jeder absolute Wert der einen digitalen Wert aufweist der größer ist als eine bestimmte Schwelle (SEUIL1), durch eine Gewichtungskonstante (VAL1) ersetzt wird, die größer oder gleich ist wie die Schwelle, wobei das Verfahren ferner **dadurch gekennzeichnet ist, dass** der zweite Koeffizient (COEFF2) bestimmt wird, basierend auf den absoluten Werten der aufeinanderfolgenden digitalen Werte, die durch das Sampling des Signals während der zweiten Zeitperiode erhalten werden.

8. Das Verfahren nach Anspruch 7, wobei der zweite Koeffizient (COEFF2) der Summe der absoluten Werte, möglicherweise korrigiert, der aufeinanderfolgenden digitalen Werte entspricht, die durch Sampling des Signals während der zweiten Zeitperiode erhalten werden.
